# EUROPEAN PATENT APPLICATION

(11) **EP 2 424 271 A1**
(43) Date of publication of application: **29.02.2012**
(21) Application number: 09843608.2
(22) Date of filing: 24.04.2009
(51) Int. Cl.: H04R 3/00, G11B 27/02, G11B 27/032

(54) **MIXER DEVICE, PLAYER, REPRODUCTION SYSTEM, MIXER DEVICE CONTROL METHOD, PLAYER CONTROL METHOD, AND PROGRAM**

(71) Applicant: Pioneer Corporation, Kanagawa 212-0031 (JP)
(72) Inventor: MASHITA, Takashi, Tokyo 143-8564 (JP); UMEHARA, Kazuhiko, Tokyo 143-8564 (JP); KIMURA, Tomohiko, Tokyo 143-8564 (JP); KIKUCHI, Tetsuya, Tokyo 143-8564 (JP); NITTA, Takafumi, Tokyo 143-8564 (JP)
(74) Representative: Haley, Stephen
(86) International application number: PCT/JP2009/001891
(87) International publication number: WO 2010/122608

(57) **Abstract**

A mixer device, a player and a reproduction system and the like are provided which enable a user to acknowledge at the player side whether reproduction signals being reproduced with the player are in an on-air state (whether it is output from the mixer device side) and can prevent mistaken operations by the user. The mixer device 20 of the invention is connected to one or more players 10 and outputs reproduction signals being reproduced with the player 10 to an output device 30, and further outputs an on-air signal indicating that the reproduction signals are output to the output device 30 (being in an on-air state) to the player 10 as input source of the reproduction signals.

## Description

### TECHNICAL FIELD

The present invention relates to a mixer device which is connected to one or more players and outputs reproduction signals reproduced by the players to an output device, the player, a reproduction system, a method of controlling the mixer device, a method of controlling the player and a program.

### BACKGROUND ART

Generally, a mixer device is connected to a plurality of players and mixes reproduction signals (for example, audio signals) reproduced by each player to output to an output device such as an amplifier or a speaker. These kinds of mixer device and players are often used as DJ equipment (equipment used by disc jockeys (DJ) for acoustic performances) in a club or the like (see patent document 1). Therefore, an operation by which a track being reproduced by a player is changed to another track not being reproduced by another player is frequently performed.

[Patent Document 1] JP-A-2002-329387

### DISCLOSURE OF THE INVENTION

### PROBLEMS THAT THE INVENTION IS TO SOLVE

As described above, in a case that reproduction signals of the players are output via the mixer device, a user (an operator) detects whether the reproduction signals are in an on-air state (whether the reproduction signals are output from the mixer device to the output device) by a state of manipulation members such as faders in the mixer device. In short, at the player side, it is not possible to acknowledge whether the reproduction signals output from the mixer device are actually being reproduced. Therefore, in spite of being in the on-air state, a mistaken operation may be performed such as reproduction interruption, loading a next track, and an eject operation of the device on the player side. When such a mistaken operation is performed, the track is interrupted and musical performances can be obstructed. Especially, when the device is used as DJ equipment in a club or the like, an atmosphere may be turned off by, leading to a crucial problem.

### MEANS FOR SOLVING THE PROBLEMS

In view of the above problem, it is an advantage of the invention to provide a mixer device that can detect on the player side whether reproduction signals and being reproduced with a player is in an on-air state and can avoid that a user operates the player mistakenly, the player, a reproduction system, a method of controlling the mixer device, a method of controlling the player and a program.

### EFFECT OF THE INVENTION

According to one aspect of the invention, there is provided a mixer device connected to one or more players and outputting a reproduction signal reproduced by the player to an output device having: a reproduction signal input device that receives the reproduction signal from at least a player among the one or more players; a reproduction signal output device that outputs the reproduction signal input from the reproduction signal input device to the output device; and an on-air information output device that outputs on-air information indicating that the reproduction signal is output to the output device by the reproduction signal output device to the player as input source of the reproduction signal.

According to another aspect of the invention, there is provided a player outputting a reproduction signal to a mixer device connected to an output device having: a reproduction signal output device that outputs the reproduction signal to the mixer device; an on-air information input device that receives on-air information indicating that the reproduction signal output from the reproduction signal output device is output from the mixer device to the output device; and a control device that performs predetermined control to avoid a mistaken operation based on the on-air information input from the on-air information input device.

According to these structures, since the mixer device outputs the on-air information indicating that the reproduction signal input from the player is output to the output device (as being in an on-air state) to the player as input source to the reproduction signal, it is possible to acknowledge on the player side whether the reproduction signal being reproduced with the player is in the on-air state. Further, it is possible to prevent a user from mistakenly operating by performing predetermined control based on the input on-air information by the player.
"The reproduction signal" may be an audio signal or a video signal.
The phrase of "being reproduced" means that the reproduction is being performed on the player side (the reproduction signal is output from the player to the mixer device), and differs from the "on-air state" indicating the reproduction signal is output from the mixer device to the output device.
"The on-air information" may indicate that an output levels equal to, more than or beyond a predetermined output level is output to an outside. In this case, the predetermined output level may be Min (minimum).

In the mixer device described above, it is preferable that the on-air information output device output output level information about the output level of the reproduction signal as a part of the on-air information to the player as input source of the reproduction signal.

In the player described above, it is preferable that the control device perform display control of an on-air display device that changes a display form based on whether there is an input of the on-air information as the predetermined control.

In the player described above, it is preferable that the on-air information include output level information about an output level of the reproduction signal output from the mixer device to the output device, and the control device changes the display form of the on-air display device based on the output level information.

According to these structures, it is possible to acknowledge whether the reproduction signal is output from the mixer device to the output device and the output level of the reproduction signal on the player side. Further, the display on the on-air display device allows the user to acknowledge whether there is an output of the reproduction signal being reproduced and the output level thereof on the player side, leading to improved operability.

In the mixer device described above, it is preferable that the output level information be generated based on at least one of an output level ratio of one or more reproduction signals output to the output device, an output level of each reproduction signal before a master output level adjustment, and the output level of each reproduction signal after the master output level adjustment.

According to the structure, it is possible to generate the output level information by a parameter of an item or items among the output level ratio of one or more reproduction signals output to the output device, the output level of each reproduction signal before the master output level adjustment and the output level of each reproduction signal after the master output level adjustment.
The user may set (select) which item of the parameter should be used to generate the output level information.

In the player descried above, it is preferable that the control device change the display form of the on-air display device when a remaining reproduction time of the reproduction signal being reproduced is within a predetermined time while the on-air information is input.

According to the structure, it is possible for the user to acknowledge that the reproduction signals being reproduced remain few.

In the player described above, it is preferable that the control device change at least one of a display color, luminance, a display content and a blinking speed of the on-air display device as the display form.

According to the structure, the user can acknowledge whether there is the reproduction signal being reproduced with the player, the output level thereof, the remaining reproduction time and the like based on the display color, the luminance, the display content, and the blinking speed of the on-air display device. The user may set the display form to be changed based on the on-air information or the output level information.

In the player described above, it is preferable that the reproduction signal include an audio signal, and the control device blink the on-air display device in synchronization with BPM of the reproduction signal being reproduced.

According to the structure, since the on-air display device blinks in synchronization with the BPM of the reproduction signal (audio signal), the user during performances never feels a sense of difference caused that the BPM of the reproduction signal shifts from a blinking timing.
Analysis of the BPM may be performed on the player side or the mixer device side. Data preliminary analyzed about the BPM may be used in place of analyzing the BPM with the player or the mixer device.

In the player described above, it is preferable that the control device limit a function of a predetermined manipulation member as the predetermined control when the on-air information is input.

According to the structure, it is possible to prevent the user prom operating mistakenly by limiting the function of the predetermined manipulation member which should not be performed during the reproduction.
The phrase of "the function of the predetermined manipulation member" indicates functions such as ejecting a device in which the reproduction signal being reproduced is recorded thereon, loading another track, interruption of reproduction, a skip operation which may possibly be an obstacle for the reproduction.
Further, "the predetermined manipulation member" or "the function of the predetermined manipulation member" may be set by the user. As for the latter, it is advantageous, when a plurality of functions assigned to one manipulation member, to limit some of the functions thereamong.

In the player described above, it is preferable that the control device control to display at least a reason or a content which urges a user to determine cancellation of limitation on a display device capable of displaying a character or an image when the function of the predetermined manipulation member is limited or is being limited.

According to the structure, it is possible to announce a reason before the function of the predetermined manipulation member is limited or when the predetermined manipulation member is operated, and to commit determination of limitation cancellation to the user.
The user may set whether these are displayed, a display timing (which timing is used for displaying, before or when the function of the predetermined manipulation member is limited), the display content and the like.

In the player described above, it is preferable that the control device reproduces repeatedly at least a part of the reproduction signal being reproduced when a predetermined operation is performed as the predetermined control while the on-air information is input.

According to the structure, even in a case that an operation such that the reproduction of the reproduction signal is mistakenly interrupted is performed when the reproduction signal is being reproduced, it is possible to avoid the interruption by the repeated reproduction. Therefore, it is possible to avoid a crucial mistake by which an atmosphere may be turned off by because of the track interruption in such a case that the player of the invention is used as DJ equipment.
The phrase of "the predetermined operation" indicates operation such as ejecting a device in which the reproduction signal being reproduced is recorded thereon, loading another track, interruption of reproduction, a skip operation which may possibly be an obstacle for the reproduction.
The user may set which operation causes the player to repeatedly reproduce as "the predetermined operation".

In the player described above, it is preferable that the control device increase, when the on-air information is input, a buffered amount of the reproduction signal than when the on-air information is not input, and repeatedly reproduces at least a part of the buffered reproduction signal when the predetermined operation is performed.

According to the structure, since the repeated reproduction may be performed by a mistaken operation during the reproduction of the reproduction signal, the buffered amount is increased in preparation for the mistaken operation, thereby, when the mistaken operation is performed, it is possible to perform the repeated reproduction with length (for example, equal or more than four beats) without making audience feel a sense of difference. Further, it is possible to repeatedly reproduce without any difficulty by using the buffered reproduction signal even when a device in which the reproduction signal being reproduced is recorded thereon is ejected.
The user may set the buffered amount of the reproduction signal during the reproduction and the non-reproduction, a timing of the repeated reproduction for the remaining buffered amount, a repeated reproduction period and the like.

In the player described above, it is preferable that the control device repeatedly reproduces at least a part of the reproduction signal being reproduced as the predetermined control when a remaining reproduction time of the reproduction signal being reproduced is within a predetermined time while the on-air information is input.

According to the structure, it is possible to avoid interruption of a track by the repeated reproduction even when a next track is not loaded in an appropriate time by any cause. Therefore, it is possible to avoid a crucial mistake such that an atmosphere may be turned off by because of the track interruption in such the case that the player of the invention is used as DJ equipment.
The user may set the repeated reproduction period corresponding to "the predetermined time" and "at least a part of the reproduction signal being reproduced" and the like.

In the player described above, it is preferable that the control device control to display at least one of a message and a reason indicating that the repeated reproduction is performed or is being performed on an information display device capable of displaying a character or an image when the repeated reproduction is performed or is being performed.

According to the structure, it is possible to announce the message or the reason to the user before or when the repeated reproduction is performed.
The user may set whether these are displayed, a display timing (which timing should be used for the display, before or when the repeated reproduction is performed), a display content and the like.

In the player described above, it is preferable that the on-air information input device limit a control content of the predetermined control based on a state of the player.

According to the structure, for example, when the player is not reproducing, control can be performed such that the on-air state is displayed by validating the display of the on-air display device while the function limitation of the predetermined manipulation is revoked.

In the player described above, it is preferable that the player further have a user setting device that sets whether the predetermined control is performed based on the on-air information.

According to the structure, it is possible to set whether the control based on the on-air information is performed (which structure should be applied between the structure of the invention or the known structure which the on-air information is not input) depending on the user's needs or application.

In the player described above, it is preferable that the control device do not perform the predetermined control when the on-air information is not input from the on-air information input device.

According to the structure, since the predetermined control for preventing the mistaken operation is not performed when the on-air information is not input, neither unnecessary display nor an unnecessary limitation of the functions are performed.

According to another aspect of the invention, there is provided a reproduction system having one or more players and a mixer device outputting a reproduction signal reproduced by the player to an output device, the mixer device having: a reproduction signal input device that receives the reproduction signal from at least a player from the one or more players; a reproduction signal output device that outputs the reproduction signal input from the reproduction signal input device to the output device; and an on-air information output device that outputs on-air information indicating that the reproduction signal from the reproduction signal output device is output to the output device to the player as input source of the reproduction signal, the player having: a reproduction signal output device that outputs the reproduction signal to the mixer device; an on-air information input device that receives the on-air information from the mixer device; and a control device that performs a predetermined control for avoiding a mistaken operation based on the on-air information input from the on-air information input device.

According to another aspect of the invention is to provide a method of controlling a mixer device connected to one or more players and outputting a reproduction signal reproduced by the player having the steps performed by the mixer device of: receiving the reproduction signal from at least a player among the one or more players; outputting the input reproduction signal to the output device; and outputting on-air information indicating that the reproduction signal is output to the output device to the player as input source of the reproduction signal.

According to another aspect of the invention is to provide a method of controlling a player that outputs a reproduction signal to a mixer device connected to an output device having the steps performed by the player of: outputting the reproduction signal to the mixer device; receiving on-air information from the mixer device indicating that the reproduction signal output from the player is output to the output device by the mixer device; and performing a predetermined control for preventing a mistaken operation based on the input on-air information.

According to the other aspect of the invention is to provide a program that causes a computer to execute at least one of each step in the method of controlling the mixer device described above and each step in the method of controlling the player described above.

According to these structures, it is possible to provide the reproduction system which enables the user to acknowledge on the player side whether the reproduction signal being reproduced by the player is in the on-air state, and which prevents the user from the mistaken operations of the player, the method of controlling the mixer device, the method of controlling the player and the program.

### BRIEF DESCRIPTION OF THE DRAWINGS

FIG. 1 is a system structure diagram of a reproduction system according to an embodiment of the invention.
FIG. 2 is a plan view of a player.
FIG. 3 is a plan view of a mixer device.
FIG. 4 is a functional block diagram of the reproduction system.
FIG. 5 is a flowchart illustrating a main process regarding on-air signal transmission of the mixer device.
FIG. 6 is a flowchart of an output level detection process of the mixer device.
FIG. 7 is a flowchart of a main process of the player.
FIG. 8 is a flowchart of an on-air signal transmission process of the mixer device.
FIGs. 9A to 9C is a series of illustrative diagrams concerning generation of output level signals according to the first embodiment.
FIG. 10 is a flowchart of a control process for manipulation member function.
FIG. 11 is a flowchart of a repeated reproduction process (1) of the player.
FIGs. 12A and 12B are explanatory diagrams regarding the repeated reproduction.
Fig. 13 is a flowchart of a basic repeated reproduction process (1) of the player.
Fig. 14 is a flowchart of a repeated reproduction process (2) of the player.
Fig. 15 is a basic flowchart of the repeated reproduction process (2) of the player.
Figs. 16A to 16C are illustrative diagrams concerning generation of output level signals according to a second embodiment.
Figs. 17A to 17C are illustrative diagrams concerning generation of output level signals according to a third embodiment.

### DESCRIPTION OF EXEMPLARY EMBODIMENTS

A mixer device, a player, a reproduction system, a method of controlling the mixer device, a method of controlling the player and a program will be explained in detail with reference to the accompanying drawings. In this embodiment, the mixer device and the player of the invention applied to DJ equipment for music performance by DJs will be exemplified.

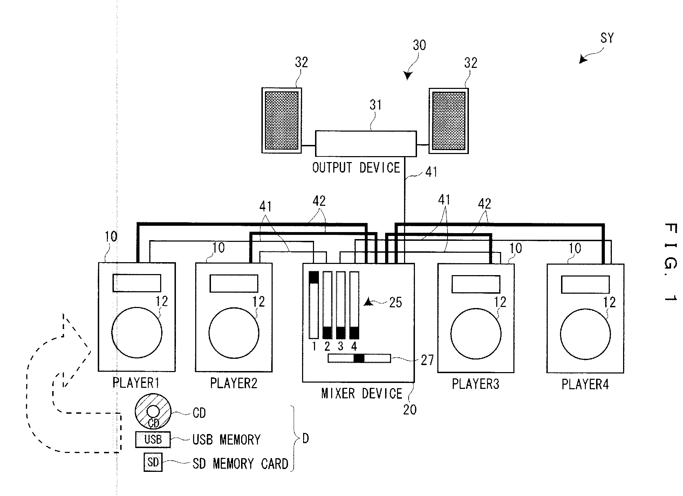

FIG. 1 is a system structure diagram of a reproduction system SY of a first embodiment. As illustrated in FIG. 1, the reproduction system SY has one or more players 10, a mixer device 20 which controls to output reproduction signals (audio signals) reproduced by the players 10, and an output device 30 which outputs the reproduction signals output from the mixer device 20 to an outside.

The player 10 can receive various devices D such as a CD, a USB memory and an SD memory card and reads to reproduce tracks (audio data) from each device D. The player 10 further has manipulation members such as a jog dial 12 to adjust a reproduction state and to perform a reproduction process such as addition of an effect based on user's manipulations.

The mixer device 20 includes manipulation members such as channel faders 25 and a cross fader 27 and performs a mixing process of the reproduction signals input from each player 10. Further, the mixer device 20 is connected to each player 10 via an audio cable 41 and an on-air signal transmission cable 42. In this embodiment, four players 10 are connected to the mixer device 20 of which "channel 1" to "channel 4" correspond to "player 1" to "player 4", respectively.

The audio cables 41 are used for inputting the reproduction signals reproduced by players 10 and RCA cables or the like are used therefor. Further, the on-air signal transmission cables 42 are used for outputting on-air signals (on-air information) indicating that the mixer device 20 is outputting the reproduction signals to the output device 30 (in an on-air state) to the players 10 as input sources of the reproduction signals, and Ethernet cables or USB cables are used therefor.

The output device 30 has an amplifier 31 and one or more speakers 32 (two speakers in FIG. 1) connected to the amplifier 31. Further, the output device 30 is connected to the mixer device 20 via the audio cable 41. Though not especially illustrated, the players 10 and the mixer device 20 have terminals (interfaces) connected to each cable 41, 42. Still further, the output device 30 has a terminal connected to the audio cable 41. As explained above, the players 10, the mixer device 20 and the output device 30 are connected by cables, but they may be connected wirelessly. In other words, the reproduction signals and the on-air signals may be sent and received by wireless communication.

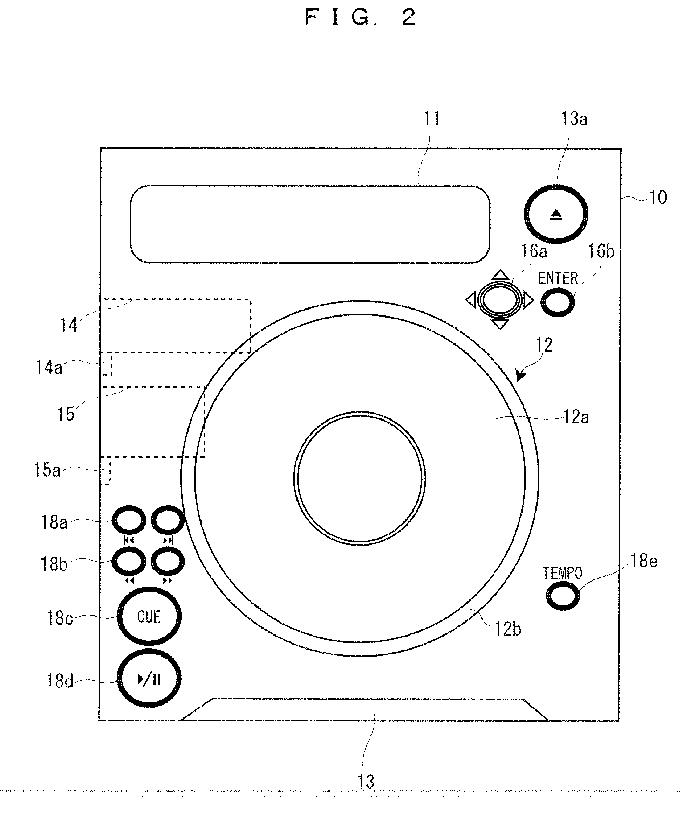

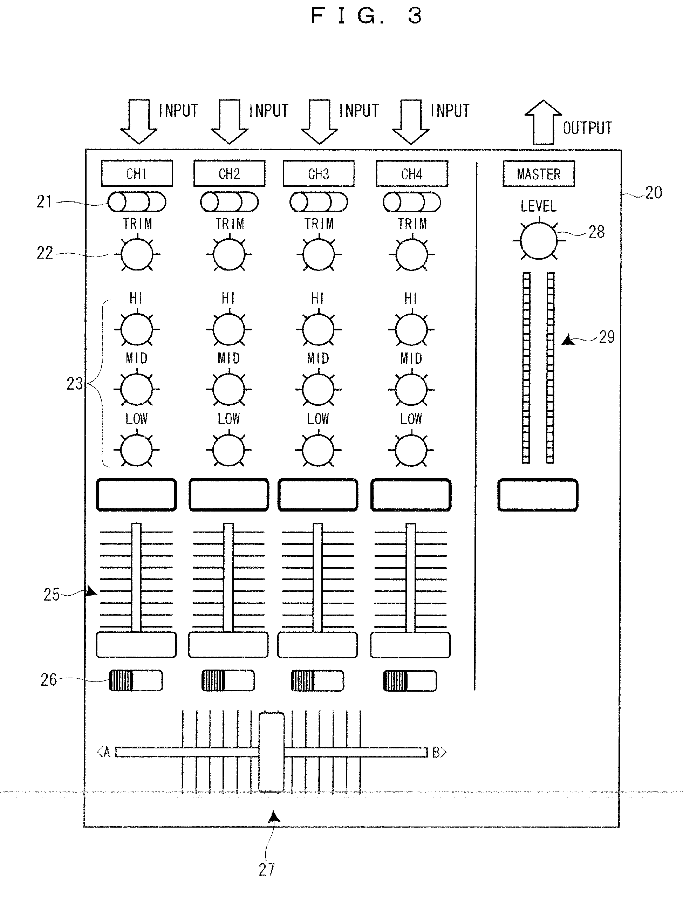

Referring to FIGs. 2 and 3, device structures of the player 10 and the mixer device 20 are briefly explained. FIG. 2 is a plan view illustrating a device structure of the player 10. The player 10 has a display section 11, a jog dial 12, a CD insertion slot 13, a CD eject button 13a, a USB memory slot 14, a USB memory eject button 14a, an SD memory card slot 15, an SD memory card eject button 15a, a cursor button 16a, an enter button 16b, a track search button 18a, a manual search button 18b, a cue button 18c, a play/pause button 18d and a tempo reset button 18e and the like.

The display section 11 is made of a liquid crystal display or the like and displays various pieces of information. The jog dial 12 has a jog dial body 12 and a jog LED 12b. The jog dial body 12a is rotationally operated by the user and the jog LED 12b is used for displaying output level of the reproduction signals being reproduced by the player 10 (details are described later). The "being reproduced" means that reproduction is performed on the player 10 side (the player 10 outputs the reproduction signals) and differs from an "on-air state" indicating that the mixer device 20 outputs the reproduction signals to the output device 30. On the other hand, the cursor button 16a and the enter button 16b are used for various settings and selections. A result of manipulations thereof is reflected on the display section 11.

FIG. 3 is a plan view illustrating a device structure of the mixer device 20. The mixer device 20 has a channel selection switch 21, a trim adjustment tab 22, a channel equalizer adjustment tab 23 (for high tone, mid tone and low tone), a channel fader 25 and a cross fader assignment switch 26 and the like per channel. On a front side of the device, a cross fader 27 is provided. On a back right side of the device, a master output level adjustment tab 28 and a master level indicator 29 and the like are provided.

The channel selection switch 21 is a manipulation member for selecting either a CD/digital input or a line input between these two types of inputs. The trim adjustment tab 22 is a manipulation member for adjusting an input level of each channel. The channel equalizer adjustment tab 23 is a manipulation member for adjusting the high tone, the mid tone and the low tone of each channel. The channel fader 25 is a manipulation member for adjusting sound volume level of each channel.

The cross fader assignment switch 26 is a manipulation member for selecting to assign the output of each channel to either a left/right of the cross fader 27 (A-side or B-side) or "through". When a plurality of channels are set at a same side, added outputs are assigned. When the "through" is selected, the output of the channel fader 25 is output to a master output directly without going through the cross fader 27.

The cross fader 27 is a manipulation member for adjusting a mixing rate of each reproduction signal assigned to the left/right by the cross fader assignment switch 26. The master output level adjustment tab 28 is a manipulation member for adjusting sound volume level of the master output. The master level indicator 29 displays by LED a master output level.

On the player 10 and the mixer device 20, a number of manipulation members and indicators are provided in addition to those illustrated in FIGs. 2 and 3, which are not directly relevant to the invention. Therefore, explanations therefor are omitted.

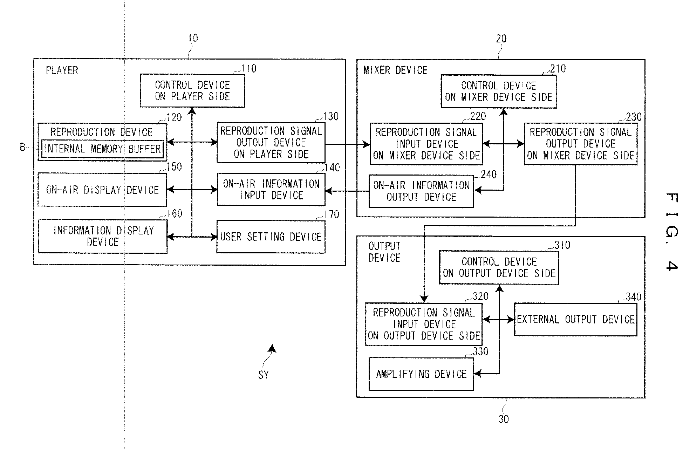

Referring to FIG. 4, a functional structure of the reproduction system SY (the player 10, the mixer device 20 and the output device 30) will be explained. The player 10 has a control device 110 on the player 10 side, a reproduction device 120, a reproduction signal output device 130 on the player 10 side, an on-air information input device 140, an on-air display device 150, an information display device 160 and a user setting device 170 as main functional structures.

The control device 110 on the player 10 side has a micro computer as main structure element and controls the player 10 integrally. The control device 110 on the player 10 side performs predetermined control (referred as "prevention control against mistaken operations" hereinafter) for preventing mistaken operations by the user based on the on-air signal when the on-air signal indicating the on-air state is input from the mixer device 20. In a case that the on-air signal is not input, the prevention control against mistaken operations is not performed. As the prevention control against mistaken operations, display control of the output levels, function limitations of predetermined manipulation members (for example, the ejection buttons 13a, 14a, 15a, the track search button 18a, the play/pause button 18d and tempo reset button 18e, etc), and repeated reproduction control or the like is performed (details will be explained later).

The reproduction device 120 reads out a predetermined amount of the audio data from the device D as needed to store in an internal memory buffer B and reproduces the audio data read out from the internal memory buffer B. Audio data recorded on a memory medium such as a hard disk installed in the player 10 may be reproduced, in addition to the audio data recorded on the memory medium as the device D detachable in the player 10.

The reproduction signal output device 130 on the player 10 side outputs the reproduction signals being reproduced by the reproduction device 120 to the mixer device 20 via the audio cable 41.

The on-air information input device 140 receives the on-air signal from the mixer device 20 indicating that the reproduction signal output from the reproduction signal output device 130 on the player 10 side is output to the output device 30 by the mixer device 20 via the on-air signal transmission cable 42.

The on-air display device 150 has the jog LED 12b as main structure element and displays based on an output level signal (output level information) included in the on-air signal. The control device 110 on the player 10 side determines luminance of the on-air display device 150 (the jog LED 12b) according to the output level signal included in the on-air signal when the on-air signal is input, and blinks the on-air display device 150 with the luminance. Further, in this case, the control device 110 on the player 10 side blinks the on-air display device 150 in synchronization with BPM of the reproduction signals being reproduced. The BPM may be analyzed on the player 10 side or the mixer device 20 side. Data of the BPM analyzed beforehand may be used. The control device 110 on the player 10 side may change a display style of the on-air display device 150 when a remaining reproduction time of the reproduction signals being reproduced is within a predetermined time frame. For example, it is conceivable that the on-air display device 150 is switched from a lighting state to a blinking state when the remaining reproduction time of the reproduction signals is within thirty seconds. The user can acknowledge that the reproduction signals being reproduced become few.

The information display device 160 has the display section 11 as main structure element and displays a message indicating that the prevention control against mistaken operations based on the on-air signals is performed and the like. For example, in a case that a function of a predetermined manipulation member of the player 10 is limited with the input of the on-air signal, the control device 110 on the player 10 side makes the information display device 160 display a reason therefor and a content which urges the user to determined about cancellation of limitation. Further, the control device 110 on the player 10 side makes the information display device 160 display that the repeated reproduction is performed and a reason therefor when the repeated reproduction is performed in association with the input of the on-air signal. The display on the information display device 160 may be displayed with characters (texts) or images such as signs.

The user setting device 170 has the cursor button 16a and the enter button 16b as main structure elements and sets various conditions regarding the prevention control against mistaken operations. More specifically, whether the prevention control against mistaken operations is performed based on the on-air signal, whether a reason should be displayed when the functions of the predetermined manipulation members are limited or the repeated reproduction is performed, repeated reproduction period when the repeated reproduction is performed and the like can be set.

Next, functional structure of the mixer device 20 will be explained. The mixer deice 20 has a control device 210 on the mixer device 20 side, a reproduction signal input device 220 on the mixer device 20 side, a reproduction signal output device 230 on the mixer device 20 side and an on-air information output device 240 as main functional structures.

The control device 210 on the mixer device 20 side has a micro computer and the like as main structure elements and controls the mixer device 20 integrally. The reproduction signal input device 220 on the mixer device 20 side receives the reproduction signals output from the reproduction signal output device 130 on the player 10 side via the audio cable 41.

The reproduction signal output device 230 on the mixer device 20 side outputs the reproduction signals input from the reproduction signal input device 220 on the mixer device 20 side to the output device 30 via the audio cable 41. The output reproduction signals are not the input reproduction signals as they are, but signals which are processed by the mixing process, output level adjustment process and the like with the input reproduction signals.

The on-air information output device 240 outputs the on-air signal indicating that the reproduction signal output device 230 on the mixer device 20 side outputs the reproduction signals to the output device 30 to the player 10 (the on-air information input device 140) as input source of the reproduction signals via the on-air signal transmission cable 42. As described above, the on-air information output device 240 outputs the output level signal regarding the output level of the reproduction signals as a part of the on-air signal. At the mixer device 20, the user can operate to set whether the on-air signal is transmitted. Therefore, the on-air information output device 240 transmits the on-air signal only when the transmission of the on-air signal is set to "yes", and does not transmit the on-air signal when the transmission of the on-air signal is set to "no".

Next, a functional structure of the output device 30 will be explained. The output device 30 has a control device 310 on the output device 30 side, a reproduction signal input device 320 on the output device 30 side, an amplifying device 330 and an external output device 340 as main functional structures.

The control device 310 on the output device 30 side has a micro computer and the like as main structure elements and controls the output device 30 integrally. The reproduction signal input device 320 on the output device 30 side receives the reproduction signals output from the reproduction signal output device 230 on the mixer device 20 side via the audio cable 41.

The amplifying device 330 has an amplifier 31 as main structure element and amplifies the reproduction signals output from the reproduction signal input device 320 on the output device 30 side with an amplifier circuit. The external output device 340 has the speaker 32 as main structure elements and outputs audibly the audio signals amplified by the amplifying device 330 to an outside.

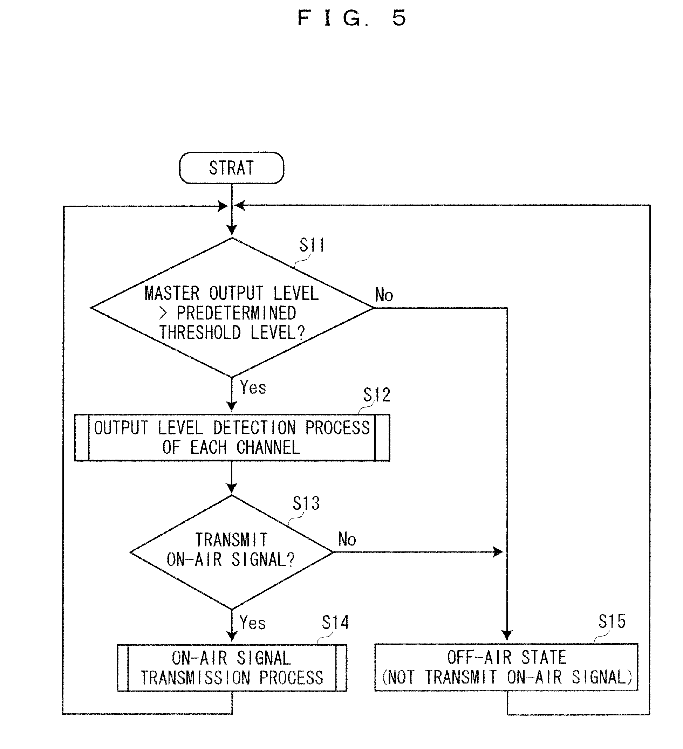

Rerring to FIGs. 5 to 15, specific operations of the reproduction system SY (especially, the player 10 and the mixer device 20) according to the first embodiment will be explained. FIG. 5 is a flowchart of a main process concerning the on-air signal transmission of the mixer device 20.

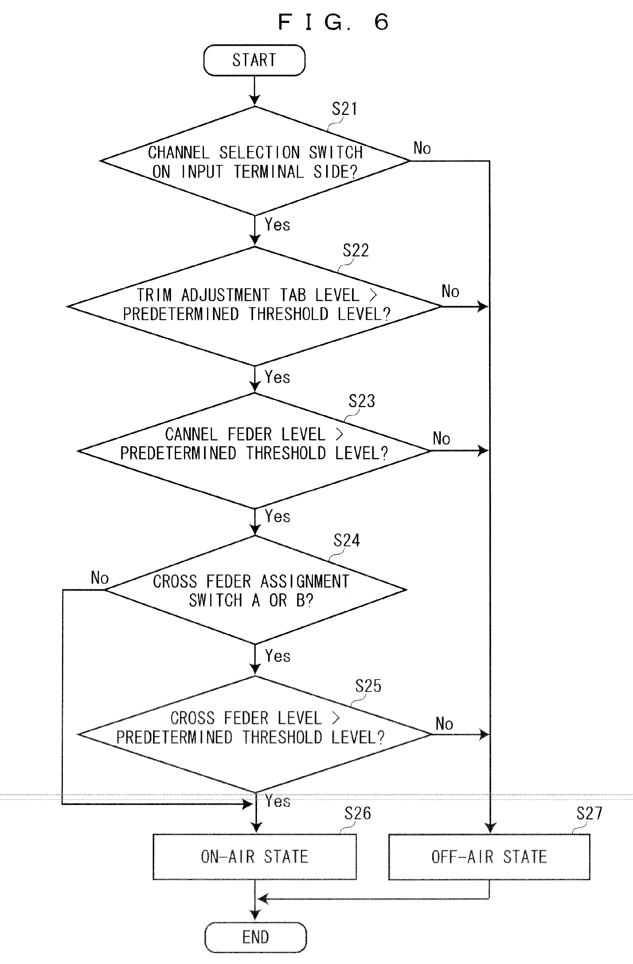

The mixer device 20 (the control device 210 on the mixer device 20 side) detects whether the master output level adjustment tab 28 is set beyond a predetermined threshold level (S11). When it is beyond the threshold level (S11: Yes), an output level detection process of each channel (see FIG. 6) is performed (S12). Then, when the on-air state is detected by the output level detection process of each channel and the on-air signal transmission is set (S13: Yes), an on-air signal transmission process is performed regarding the player 10 corresponding to the channel as destination object (S14).

On the other hand, when the master output level adjustment tab 28 is set under the predetermined threshold level (S11: No) and when the on-air signal is not set for transmission (S13: No), an off-air state is detected, thereby, the on-air signal is not transmitted (S15). The flowchart illustrated in FIG. 5 is repeatedly implemented during activation of the mixer device 20.

Referring to a flowchart of FIG. 6, the output level detection process of the mixer device 20 will be explained. The flowchart is a sub-routine corresponding to S12 in the flowchart of FIG. 5 and is implemented per channel.

The mixer device 20 (the control device 210 on the mixer device 20 side) detects whether the channel selection switch 21 is set on an input terminal side (S21). When it is on the input terminal side (S21: Yes), then, whether the trim adjustment tab 22 (a volume value) is set beyond a predetermined threshold level is detected (S22). When the trim adjustment tab 22 is set beyond the predetermined threshold level (S22: Yes), then, whether the channel fader 25 is set beyond a predetermined threshold level is detected (S23).

When the channel fader 25 is set beyond the predetermined threshold level (S23: Yes), then, whether the cross fader assignment switch 26 is set at the A-side or the B-side is detected (S24). When the cross fader assignment switch 26 is set either at the A-side or at the B-side (S24: Yes), whether the cross fader 27 is set beyond a predetermined threshold level is detected (based on the assigned side) (S25). When it is set beyond the predetermined threshold level (S25: Yes), the on-air state is detected (S26). When the cross fader assignment switch 26 is set at the "through" (S24: No), the detection of S25 is omitted and the on-air state is detected (S26).

On the other hand, when the channel selection switch 21 is not set on the input terminal side (S21: No), when the trim adjustment tab 22 is set under the predetermined threshold level (S22: No), when the channel fader 25 is set under the predetermined threshold level (S23: No), and the cross fader 27 is set under the predetermined threshold level (525: No), the off-air state is detected (S27). Though, the flowchart illustrated in FIG. 6 is only used for detecting the on-air state or the off-air state, the volume value or sound volume of each channel is also detected by the process. The volume value or the sound volume of each channel is used for generating the output level signal explained later.

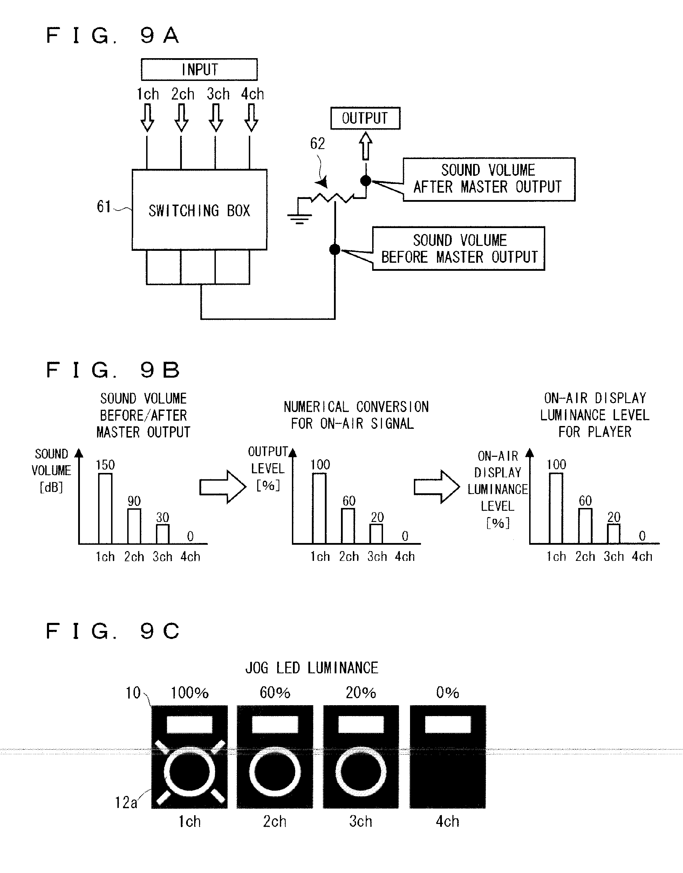

In the flowcharts illustrated in FIGs. 5 and 6, though the detections are performed based on the setting (the volume value) of each manipulation member such as the master output level adjustment tab 28, the trim adjustment tab 22, the channel fader 25 and the cross fader 27, the detections may be performed based on a sound level varied by the setting of each manipulation member (an output of a switching box 61 described later (FIG. 9A)). In this case, it is preferable that the detections be performed by whether each sound volume level is equal or more than the predetermined threshold value. In other words, even in a case that an anacoustic track is reproduced, it is possible to correctly detect the on-air state by detecting "the sound volume level of each manipulation member ≥ the predetermined threshold value". On the other hand, as the example above, in the case that the detections are performed based on the volume value of each manipulation member, if the detection is performed with "the volume value of each manipulation member ≥ the predetermined threshold value", the on-air state could be detected even the volume value is set to Min (minimum) in a case of the predetermined threshold value = Min. Therefore, it is preferable that the detection be performed with "the volume value of each manipulation member > the predetermined threshold value".

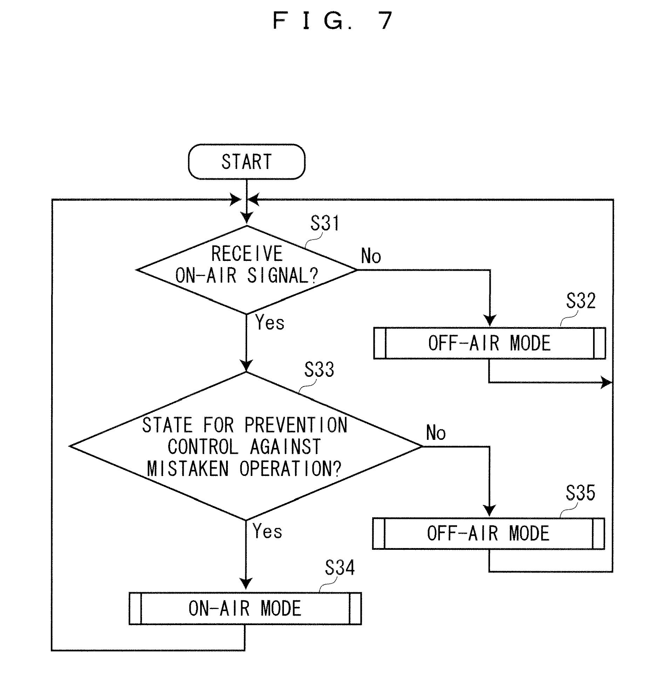

Referring to a flowchart of FIG. 7, a main process regarding on-air signal reception of the player 10 will be explained. The player 10 (the control device 110 on the player 10 side) detects whether the on-air signal is received (input) from the mixer device 20 (S31). When the on-air signal is not received (S31: No), an operation mode is set to an off-air mode (S32).

On the other hand, when the on-air signal is received from the mixer device 20 (S31: Yes), whether the player 10 is in a state for the prevention control against mistaken operations (S33). As described above, the user setting device 170 can set whether the prevention control against mistaken operations is performed. Further, it can set to relate the state of the player 10 with a content of the prevention control against mistaken operations in that state as a detailed setting. For example, a function limitation of a predetermined manipulation member is not made when the player 10 is not reproducing, but the display of the jog LED 12 is available. In S33, when the state for the prevention control against mistaken operations is detected (S33: Yes), the operation mode is set to the on-air mode (S34). In short, as described above, in the case that the content of the prevention control of mistaken operations in the non-reproduction is set, since "to validate the display of the jog LED 12b" is being set, the on-air mode is set. On the other hand, a state that the prevention control against mistaken operations is performed is not detected (S33: No), the operation mode is set to the off-air mode (S35). For example, in a case that all the prevention control against mistaken operations is not performed is set for a state of the player 10 of "the non-reproduction", the off-air mode is set.

In the example above, the content setting of the prevention control against mistaken operations in "the non-reproduction" of the player 10 has been described, but contents of the prevention control against mistaken operations can be set in various states of the player 10 such as "in reproduction" and "CUE waiting".

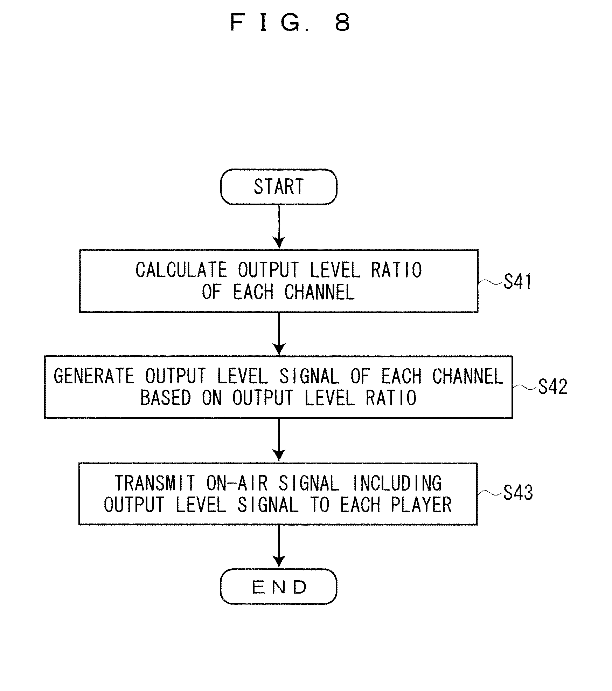

Referring to a flowchart of FIG. 8, an on-air signal transmission process of the mixer device 20 will be explained. The flowchart is a sub-routine corresponding to S14 of the flowchart illustrated in FIG. 5.

The mixer device 20 (the control device 210 on the mixer device 20 side) calculates a ratio of the sound volume of each channel based on an output level ratio (a ratio of the volume value or the sound volume) detected by the output level detection process (corresponding to S 12 of the flowchart illustrated in FIG. 5) illustrated in FIG. 6 (S41). Then, the output level signal of each channel is generated based on the output level ratio of each channel (S42), and the on-air signal including the generated output level signal is transmitted to the player 10 corresponding to each channel (S43).

FIGs. 9A to 9C is a series of explanatory diagrams concerning the generation of the output level signal. FIG. 9A is a simple circuit diagram of the mixer device 20. The numeral 61 indicates the switching box which controls the sound volume of the trim adjustment tab 22, the channel faders 25 and the cross fader 27, and a numeral 62 indicates a resistor corresponding to the master output level adjustment tab 28. In the explanation below, "sound volume before the master output" means an output between the switching box 61 and the resistor 62, and "sound volume after the master output" means an output after passing through the resistor 62.

FIG. 9B illustrates a generation process of the output level signals. For example, it is assumed that the sound volume of "channel 1", "channel 2", "channel 3" and "channel 4" of the mixer device 20 is 150 dB, 90 dB, 30 dB and 0dB, respectively. "The sound volume" in this case may be the above-mentioned "the volume before the master output" or "the volume after the master output".

In such conditions, when an output level of a channel with maximum sound volume is normalized as 100%, the output levels of "the channel 1" to "the channel 4" can be calculated as 100%, 60%, 20% and 0%. The mixer device 20 generates the output level signals based on these output levels. While, each player 10 determines on-air display luminance levels (luminance of the jog LED 12b) based on the output level signals obtained from the mixer device 20. In short, the on-air display luminance levels of "the player 1" to "the player 4" are 100%, 60%, 20% and 0%.

FIG. 9C is a diagram illustrating luminance of the jog LEDs 12b on the players 10 after obtaining the above output level signals. As illustrated in FIG. 9C, the jog LED 12b on each player 10 is illuminated with luminance corresponding to the output level of each channel.

Thus, since each player 10 makes the jog LED 12b illuminate with the luminance corresponding to the output level of each channel in the on-air mode, the user can acknowledge output levels at the player 10 side, without checking a state of the faders of the mixer device 20.

In the example above, though the jog LED 12b of the player 10 is illuminated based on the output level of each channel, the jog LED 12b may be illuminated based on whether the operation mode is in the on-air state. In other words, a simple structure may be employed such that the jog LED 12b is illuminated when the player 10 is in the on-air mode and it is turned off when in the off-air mode. Further, a display device which illuminates based on the output level and a display device which illuminates based on the mode state may be separately provided on the player 10.

The user setting device 170 may set whether the jog LED 12b is illuminated based on the output level or on the mode state, whether the jog LED 12b is blinked or turned on, how fast a blinking speed is set (the number of blinking per beat) when it blinks, whether the blinking is in synchronization with the BPM and the like.

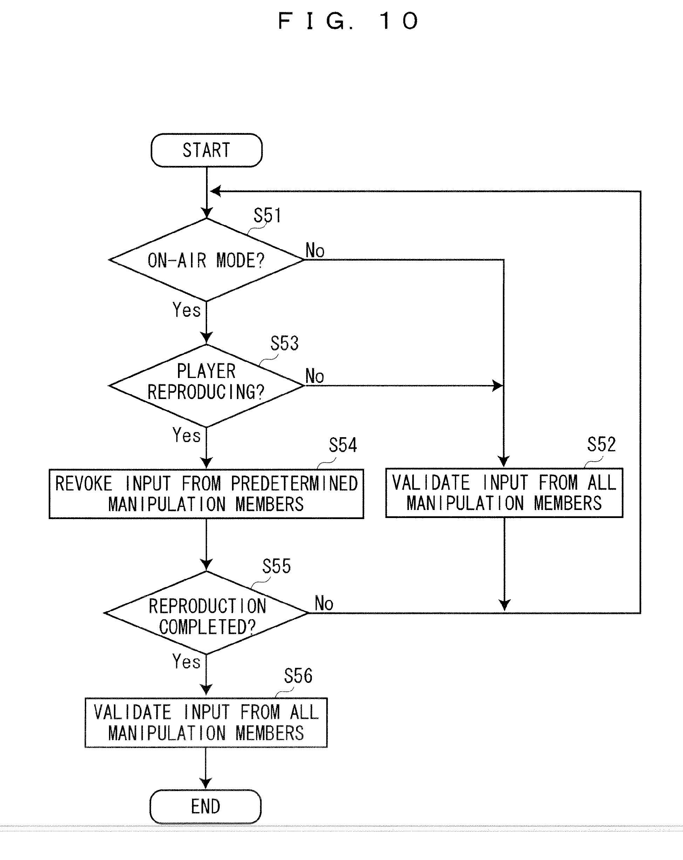

Referring to a flowchart of FIG. 10, a function limitation process of a manipulation member on the player 10 will be explained. When the player 10 is in the non-production state, the function limitation of the predetermined manipulation member is not performed (inputs from all the manipulation members are validated) and other prevention control against mistaken operations is implemented (such that the display of the jog LED 12b is validated) by the user setting device 170. The player 10 (the control device 110 on the player 10 side) detects whether the operation mode is in the on-air mode (S51). When the on-air mode is not detected (S51: No), inputs (functions) of all the mounted manipulation members are validated (S52) and the process returns to S51.

On the other hand, when the on-air mode is detected (S51: Yes), whether the player 10 is reproducing is detected (S53) and when it is not reproducing (S53: No), the inputs from all the manipulation members are validated (S52) and the process turns back to S51. On the other hand, when the player 10 is reproducing (S53: Yes), inputs from predetermined manipulation members (manipulation members which may create a reproduction problem by manipulation such as with the eject buttons 13a, 14a, 15a, the track search button 18a, the play/pause button 18d, and the tempo reset button 18e) are revoked (S54).

After S54, whether the reproduction is completed is detected (S55) and when the reproduction is completed (S55: Yes), the inputs from all the manipulation members are validated (S56) and the process terminates. On the other hand, the reproduction is not completed (S55: No), the process returns to S51. As such, according to the function limitation process of the manipulation member, it is possible to avoid mistaken operations by the user in the on-air mode.

Though not especially described in the flowchart above, when an input of a predetermined manipulation member is revoked or when a function of a predetermined manipulation member is limited, the information display device 160 displays a reason (such as in the on-air mode or for mistaken operation prevention) and a content (a message such as "validate the input of the predetermined manipulation member?") which urges the user to decide about cancellation of limitation.

In the example above, the input of the predetermined manipulation member is validated/revoked, but, when a plurality of functions are assigned to one manipulation member, it is possible to validate/revoke one of the functions only. The user setting device 170 may set "the predetermined manipulation member" or "the function of the predetermined manipulation member" as the switched object for validity/revoke in the function limitation process of the manipulation member.

Further, in the example above, when the input of the predetermined manipulation member is revoked, the information display device 160 displays a message indicating that it is revoked, but, the message indicating the revoke of the input of the predetermined manipulation member may be displayed before revoking the input of the predetermined manipulation member. In short, the message may be always displayed when the operation mode is in the state in which the function of the predetermined manipulation member is limited (the on-air mode).

The user setting device 170 may set whether these are displayed on the information display device 160, a display timing (which timing should be used for the display, before or at the time of the function limitation of the predetermined manipulation member), a displayed content and the like.

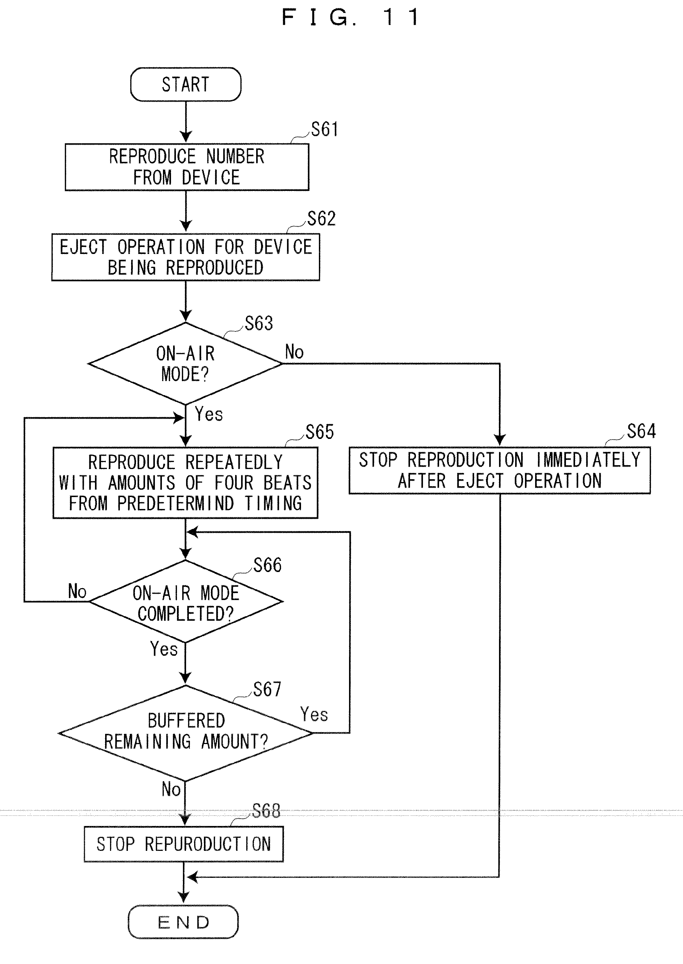

Referring to a flowchart of FIG. 11, a repeated reproduction process (1) of the player 10 will be explained. A case will be explained where the repeated reproduction is performed by a trigger indicating that a predetermined manipulation is performed such that the reproduction of reproduced signals is interrupted (in this example, an eject operation of the device D) during the reproduction.

The player 10 (the control device 110 of the player 10 side) detects, in a state where a track is being reproduced from the device D (S61), when the device D being reproduced is ejected (S62), whether the operation mode is in the on-air mode (S63). When the on-air mode is not detected (563: No), the reproduction is immediately stopped after the eject operation and the process terminates.

On the other hand, when the on-air mode is detected (S63: Yes), for example, amounts of four beats among amounts stored in the internal memory buffer B are repeatedly reproduced from a predetermined timing (S65), and whether the on-air mode is completed is detected (S66). In a case that the on-air mode is not completed (S66: No), the process returns to S65. In a case that the on-air mode is completed (S66: Yes), whether the internal memory buffer B still has remaining buffered amounts therein (S67). If there is any buffered remaining amounts (S67: Yes), the process returns to S66. If there is no remaining buffered amount (S67: No), the reproduction is stopped (S68) and the process terminates.

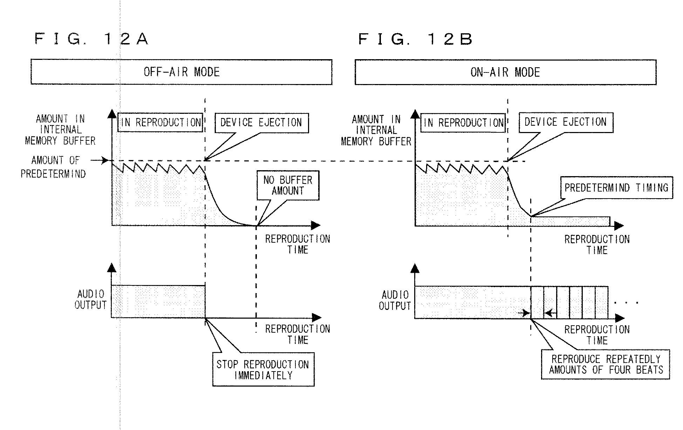

FIGs. 12A and 12B are explanatory diagrams concerning the repeated reproduction. FIG. 12A is a diagram illustrating a reproduction method in the off-air mode. In this case, predetermined amount of data is buffered in the internal memory buffer B during the reproduction, but the reproduction is immediately stopped as soon as the device D is ejected.

FIG. 12B is a diagram illustrating a reproduction method in the on-air mode. In this case, predetermined amount of data is also buffered in the memory buffer B during the reproduction and the buffered data decreases after the ejection of the device D. Amounts corresponding to four beats from a predetermined timing after the device D has been ejected is held and it is reproduced repeatedly.

Thus, according to the repeated reproduction process (1), even when the user ejects the device D by mistake, it is possible to avoid interrupting the track.

There is an advantage that a DJ can carry a device D for his/her own when DJs change, by utilizing the repeated reproduction process (1) intentionally. For example, in a case that an existing player not having the function of the repeated reproduction process (1) is used, a DJ (A) changes to a next DJ (B) after the DJ (A) finishes the performances while the last track is in the on-air state. Therefore, the DJ (B) has to give musical performances by using his/her own device D consecutively and has to eject the device D of the DJ (A) to put it in a predetermined place temporarily. Also, the DJ (A) has to fetch the device D put in place temporarily after a while after the DJ (A) has completed the performances. While, by using the player 10 having the function of the above repeated reproduction process (1), the DJ (A) can eject the device D to bring it back just after the DJ (A) has finished the performances. Therefore, both the DJs (A) and (B) can omit the problems above.

The phrase of "the predetermined timing after ejecting the device" may be at the time of detecting a beginning portion of a beat firstly (or secondly, thirdly) after ejecting the device D, or a beginning timing of the last four beats among the data buffered in the internal memory buffer B.

In the example above, the eject operation of the device D is exemplified as "the predetermined operation" such that the reproduction of the reproduction signals is interrupted, but it may be other operations by pressing the eject buttons 13a, 14a, 15a, the track search button 18a, the play/pause button 18d, or the tempo reset button 18e.

The user setting device 170 may set whether the repeated reproduction is performed by the trigger with the predetermined operation, a content of the predetermined operation, the predetermined timing and a repeated reproduction period (for four beats, eight beats, etc) and the like.

Further, in the example above, the data amount buffered in the internal memory buffer B is same in the off-air mode and the on-air mode (see FIGs. 12A and 12B), but the buffered data amounts in the on-air mode may be more than that in the off-air mode. According to the structure, since there is a possibility that the repeated reproduction may be performed because of a mistaken operation in the on-air mode, the buffered amounts are increased in preparation for the mistaken operation, thereby, when the mistaken operation is made, it is possible to perform the repeated operation with length (for example, equal or more than four beats) without making audience feel a sense of difference even in a track of which data amount per beat is much. The user setting device 170 may set the buffered amounts in the on-air mode and the off-air mode.

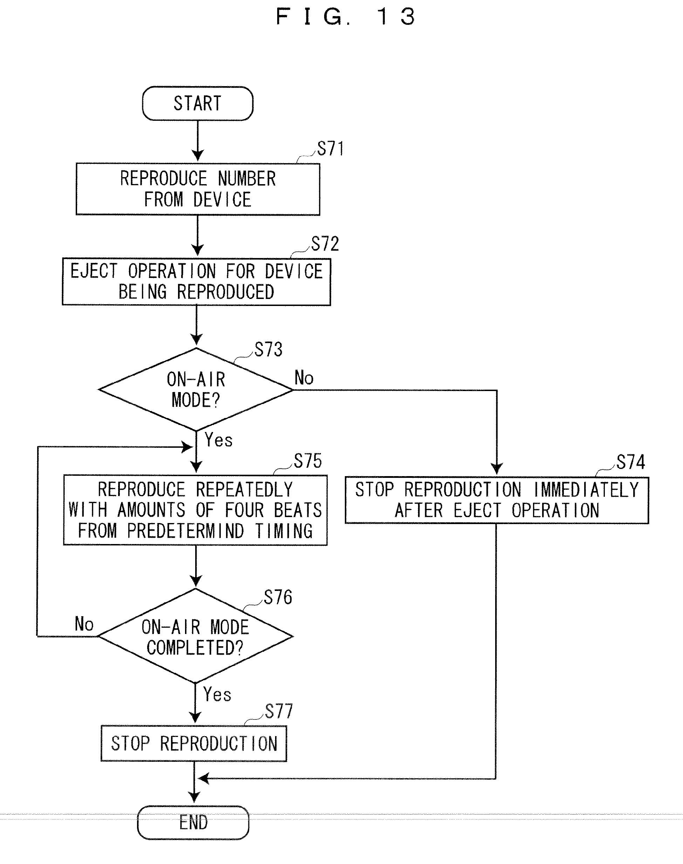

In the flowchart illustrated in FIG. 11, though the case in which the off-mode is set and the on-air mode is set again during the repeated reproduction is considered, a flowchart in which the process has not been considered may be used. FIG. 13 is a flowchart illustrating a basic form of the repeated reproduction process (1) of the player 13. S71 to S76 in FIG. 13 correspond to S61 to S66 in FIG. 11. The difference from the flowchart of FIG. 11 is to stop the reproduction immediately (S77) after S76. According to the structure, it is possible to simplify the process than the example illustrated in FIG. 11.

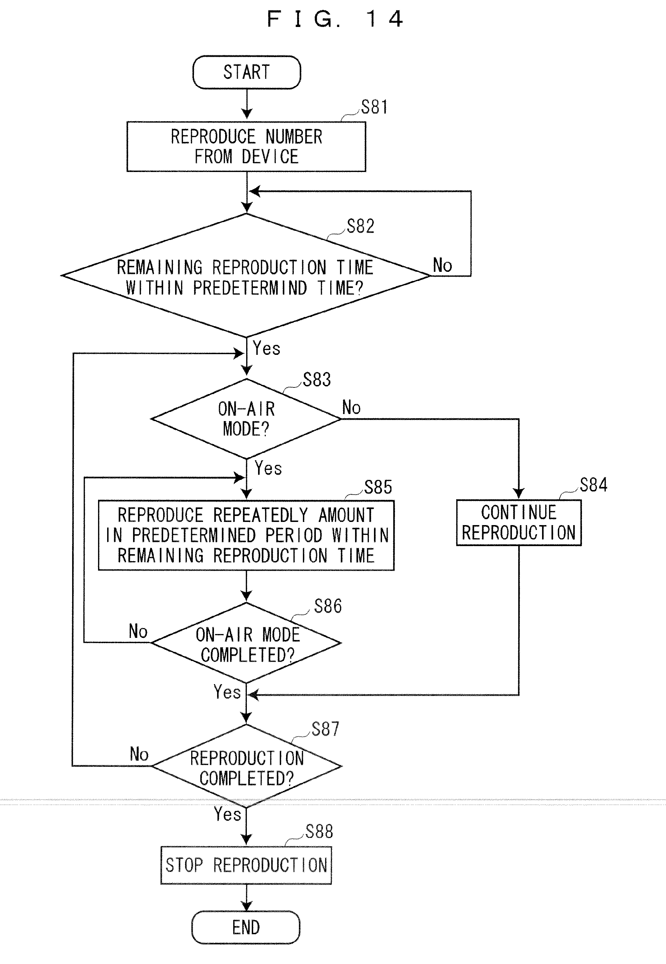

Referring to a flowchart of FIG. 14, a repeated reproduction process (2) of the player 10 will be explained. In FIG. 14, a case in which the repeated reproduction is performed by a trigger indicating that the reproduction signals being reproduced is on the verge of completion.

In a state that a track is being reproduced from the device D (S81), the player 10 (the control device 110 on the player 10 side) detects whether a remaining reproduction time is within a predetermined time (S82). When it is not within the predetermined time (S82: No), the detection of S82 is repeated. On the other hand, when the remaining reproduction time is within the predetermined time (S82: Yes), whether the operation mode is the on-air mode is detected (S83). When the on-air mode is not detected (583: No), the reproduction continues (S84).

On the other hand, when the on-air mode is detected (S83: Yes), amounts of the predetermined period is reproduced within the remaining reproduction time (S85) and whether the on-air mode is completed is detected (S86). In a case that the on-air mode is not completed (S86: No), the process returns to S85. In a case that the on-air mode is completed (S86: Yes), whether the reproduction is completed is detected (S87). When the reproduction is not completed (S87: No), the process returns to S83. When the reproduction is completed (S87: Yes), the reproduction stops (S88) and the process terminates.

Thus, according to the repeated reproduction process (2), it is possible to avoid an interruption of a track by the repeated reproduction even when a next track is not loaded in an appropriate time by any cause. The user setting device 170 may set "the predetermined time" for detecting whether the reproduction is close to an end and "the predetermined period" for repeated reproduction (repeated reproduction period) and the like.

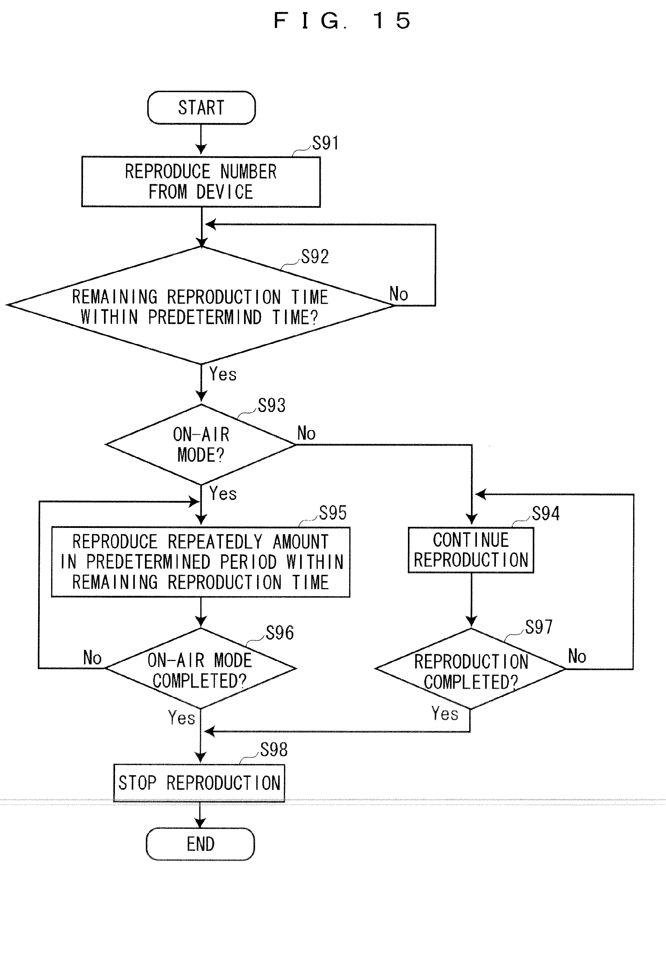

In the flowchart illustrated in FIG. 14, the case in which the operation mode is in the off-air mode during the repeated reproduction and returns to the on-air mode again is considered, but a flowchart in which that process has not been considered may be employed. FIG. 15 is a flowchart illustrating a basic form of the repeated reproduction process (2) of the player 10. S91 According to the structure, it is possible to simplify the process than the example illustrated in FIG. 14.

Though not especially described in the flowcharts of FIGs. 11, 13, 14 and 15, during the repeated reproduction processes (1), (2), the information display device 160 displays a message (the repeated reproduction is being performed) and a reason therefor (because of being in the on-air mode, for preventing an interruption of a track, or the like). The message may be displayed in the state (the on-air mode) where the repeated reproduction process is feasible, not in the state where the repeated reproduction processes (1), (2) are performed as is the case in displaying the function limitation of the above predetermined manipulation member.

As explained above, according to the first embodiment of the invention, since the on-air signal indicating the on-air state is output from the mixer device 20 to the player 10 as input source of the reproduction signals, the user can acknowledge that the reproduction signals of the player 10 is in the on-air state at the player 10 side. The on-air signal includes the output level signals and since the player 10 changes the luminance of the jog LED 12b based on the output level signal, an output level of the reproduction signals being reproduced can also be acknowledged by the player 10 side by the displayed luminance of the jog LED 12b. Since the jog LED 12b is blinking in synchronization with the BPM of the reproduction signals being reproduced, the user does not feel a sense of difference in which the BPM of the reproduction signals is asynchronization with blinking timing.

Since the player 10 limits the function of the predetermined manipulation member in the on-air mode, it is securely possible to avoid mistaken operations by the user. Since a message indicating that the function of the predetermined manipulation member is limitated is displayed on the display section 11, the user does not mistakenly perceive it as malfunction.

Even in cases where mistaken operations to interrupt the reproduction of the reproduction signals are performed or where the reproduction signals being reproduced is close to an end because a next track is not loaded in an appropriate timing by any cause, the interruption can be avoided by the repeated reproduction processes (1), (2). Therefore, in a case such that the reproduction system SY of the invention is used as DJ equipment, a crucial problem such as an atmosphere is turned off by because a track is interrupted can be avoided.

Since the on-air information input device 140 limits the control content of the prevention control against mistaken operations on the basis of a state of the player 10, it is possible to limit unnecessary functions among functions included in the prevention control against mistaken operations (displaying an output level, function limitation of a predetermined manipulation member, the repeated reproduction processes (1), (2) or the like).

Since the user setting device 170 can set whether the prevention control against mistaken operations based on the on-air signal is performed and details of the prevention control against mistaken operations, usability can be improved. Since the player 10 does not perform the prevention control against mistaken operations when the on-air signal is not input, it is possible to avoid unnecessary displays and unnecessary limitations of the functions.

In the embodiment above, though audio signals are exemplified as "the reproduction signals", video signals may be used. In this case, the output device 30 may be a display device such as a display.

Further, in the embodiment above, the on-air display device 150 changes the luminance of the jog LED 12b based on the output level signal, but display forms other than the luminance such as a display color or a blinking speed may be changed. In a case that the on-air display device 150 is made up of a liquid crystal display or the like, a display content may be changed (such that the output level of a corresponding channel is displayed as a characters (digits) or images (graphs)). The user setting device 170 may set the display form changed based on the output level signal.

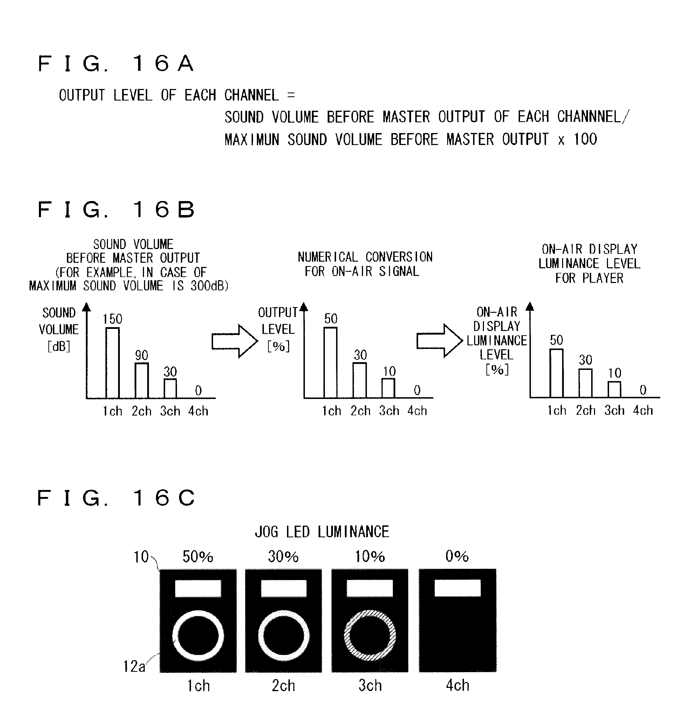

Referring to FIG. 16, a second embodiment of the invention will be explained. In the first embodiment described above, as illustrated in FIGs. 8 and 9A-9C, the output level signals are generated based on the ratio of the sound volume in each channel, but, this embodiment differs in that the output level signals are generated based on the sound volume before the master output of each channel. Hereinafter, only different points from the first embodiment will be explained. In the embodiment, the same structures as those in the first embodiment are labeled with the same numerals and details therefor are omitted. Modifications applied to the same structures in the first embodiment are also applied in this embodiment.

FIG. 16A illustrates a calculation formula for the output level of each channel according to the embodiment. As described in FIG. 16A, the output level [%] of each channel is obtained by dividing the sound volume before the master output of each channel (see FIG. 9A) by the maximum sound volume before the master output and multiplying by 100. In this embodiment, it is at least necessary that the master output level > Min.

FIG. 16B is a series of diagrams illustrating a generation step of the output level signals according to the second embodiment. For example, when the sound volume of "the channel 1" to "the channel 4" of the mixer device 20 is 150dB, 90dB, 30dB and 0dB respectively, and the maximum sound volume before the master output is 300dB, the output levels of "the channel 1" to "the channel 4" can be calculated as 50%, 30%, 10% and 0%, respectively. The mixer device 20 generates the output level signals based of these output levels. While, each player 10 determines the on-air display luminance level (the luminance of the jog LED 12b) based on the output level signal obtained from the mixer device 20. In short, the on-air display luminance levels of "the player 1" to "the player 4" are 50%, 30%, 10% and 0%, respectively.

FIG. 16C are diagrams illustrating the luminance of the jog LED 12b of each player 10 after obtaining the above output level signal. As illustrated in FIG. 16C, the jog LED 12b of each player 10 illuminates with the luminance based on the output level of each channel.

As explained above, according to the second embodiment of the invention, since the output level signals are generated based on the sound volume before the master output of each channel, the comparison operation process is not necessary as in the first embodiment in which the output level signals are generated based an the sound volume ratio of each channel, and a control load for generating the output level signals can be decreased. Further, with this advantage, since the time from the fader operations on the mixer device 20 to the illumination of the jog LED 12b is shortened, operability for the user is improved.

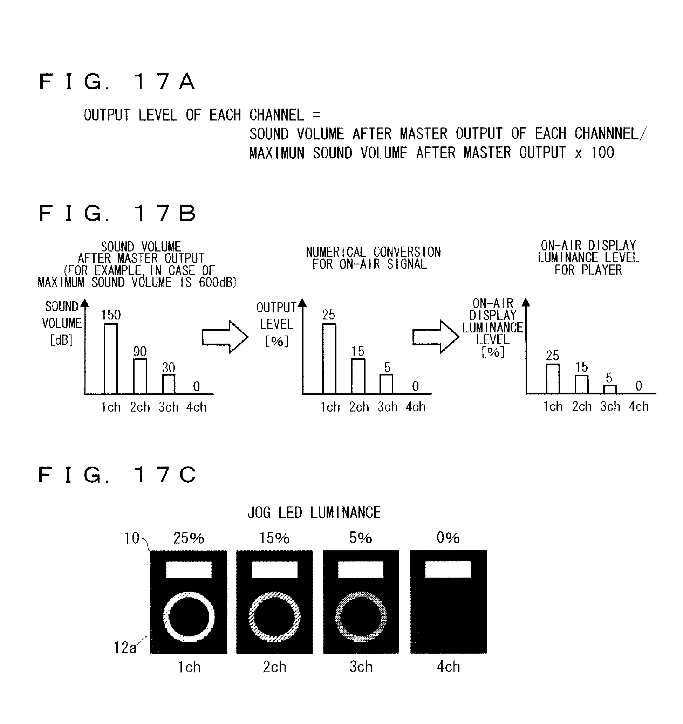

Referring to FIG. 17, a third embodiment of the invention will be explained. In the above second embodiment, the output level signals are generated based on the sound volume before the master output of each channel, but, the embodiment differs in that the output level signals are generated based on the sound volume after the master output of each channel. In this embodiment, same structures as those in the first embodiment are labeled with the same numerals, and detailed explanations therefor are omitted. Also, modifications applied to the same structures in the first embodiment are also applied in this embodiment.

FIG. 17A illustrates a calculation formula for the output level of each channel according to the embodiment. As described in FIG. 17A, the output level [%] of each channel is obtained by dividing the sound volume after the master output of each channel (see FIG. 9A) by the maximum sound volume after the master output and multiplying by 100.

FIG. 17B is a series of diagrams illustrating a generation step of the output level signals according to the third embodiment. For example, when the sound volume of "the channel 1" to "the channel 4" of the mixer device 20 is 150dB, 90dB, 30dB and 0dB respectively, and the maximum sound volume after the master output is 600dB, the output levels of "the channel 1" to "the channel 4" can be calculated as 25%, 15%, 5% and 0%, respectively. The mixer device 20 generates the output level signals based of these output levels. While, each player 10 determines the on-air display luminance level (the luminance of the jog LED 12b) based on the output level signal obtained from the mixer device 20. In short, the on-air display luminance levels of "the player 1" to "the player 4" are 25%, 15%, 5% and 0%, respectively.

FIG. 17C are diagrams illustrating the luminance of the jog LED 12b of each player 10 after obtaining the above output level signal. As illustrated in FIG. 17C, the luminance of the jog LED 12b of each player 10 becomes darker in overall in comparison with that in the second embodiment, leading to darker display.

As described above, according to the third embodiment, since the output level signals are generated based on the sound volume after the master output of each channel, it is possible to express the output levels of the mixer device 20 accurately, in comparison with the second embodiment.

Though three generation methods of the output level signals are explained in the first to the third embodiments, the user setting device 170 may set which one should be used for generating the output level signals among those methods. Further, values of two or more output level signals calculated by the three generation methods for the output level signals are combined to generate a new parameter and the output level signals may be generated based on the parameter.

Further, each structure element of the player 10 and the mixer 20 described in each embodiment above can be provided as a program. The program can also be stored and provided in various types of recording media (a CD-ROM, a flash memory, etc). Therefore, a program which makes a computer function as each structure element of the players 10 and the mixer 20 and a recording medium in which the program has been recorded are included in a scope of the invention.

Still further, the players 10 and the mixer device 20 explained above embodiments can be arbitrary adapted to an electronic musical instrument and a computer other than the DJ equipment, without departing from the scope of the invention.

### [Reference Numerals]

10: player 11: display section 12: jog dial 12b: jog LED 13: CD insertion slot 13a: CD eject button 14: USB memory slot 14a: USB memory eject button 15: SD memory card slot 15a: SD memory card eject button 20: mixer device 21: channel selection switch 22: trim adjustment tab 25: channel fader 26: cross fader assignment switch 27: cross fader 28: master output level adjustment tab 30: output device 31: amplifier 32: speaker B: internal memory buffer D: device SY: reproduction system

## Claims

1. A mixer device connected to one or more players and outputting a reproduction signal reproduced by the player to an output device comprising:
a reproduction signal input device that receives the reproduction signal from at least a player among the one or more players;
a reproduction signal output device that outputs the reproduction signal input from the reproduction signal input device to the output device; and
an on-air information output device that outputs on-air information indicating that the reproduction signal is output to the output device by the reproduction signal output device to the player as an input source of the reproduction signal.

2. The mixer device according to claim 1, wherein the on-air information output device outputs output level information about an output level of the reproduction signal as a part of the on-air information to the player as input source of the reproduction signal.

3. The mixer device according to claim 2, wherein the output level information is generated based on at least one of an output level ratio of one or more reproduction signals output to the output device, an output level of each reproduction signal before a master output level adjustment, and the output level of each reproduction signal after the master output level adjustment.

4. A player outputting a reproduction signal to a mixer device connected to an output device comprising:
a reproduction signal output device that outputs the reproduction signal to the mixer device;
an on-air information input device that receives on-air information indicating that the reproduction signal output from the reproduction signal output device is output from the mixer device to the output device; and
a control device that performs predetermined control to avoid a mistaken operation based on the on-air information input from the on-air information input device.

5. The player according to claim 4, wherein the control device performs display control of an on-air display device that changes a display form based on whether there is an input of the on-air information as the predetermined control.

6. The player according to claim 5, wherein the on-air information includes output level information about an output level of the reproduction signal output from the mixer device to the output device, and the control device changes the display form of the on-air display device based on the output level information.

7. The player according to claim 5, wherein the control device changes the display form of the on-air display device when a remaining reproduction time of the reproduction signal being reproduced is within a predetermined time while the on-air information is input.

8. The player according to claim 5, wherein the control device changes at least one of a display color, luminance, a display content and a blinking speed of the on-air display device as the display form.

9. The player according to claim 5, wherein the reproduction signal includes an audio signal, and the control device blinks the on-air display device in synchronization with BPM of the reproduction signal being reproduced.

10. The player according to claim 4, wherein the control device limits a function of a predetermined manipulation member as the predetermined control when the on-air information is input.

11. The player according to claim 10, wherein the control device controls to display at least a reason or a content which urges a user to determine cancellation of limitation on a display device capable of displaying a character or an image when the function of the predetermined manipulation member is limited or is being limited.

12. The player according to claim 4, wherein the control device reproduces repeatedly at least a part of the reproduction signal being reproduced when a predetermined operation is performed as the predetermined control while the on-air information is input.

13. The player according to claim 12, wherein the control device increases, when the on-air information is input, a buffered amount of the reproduction signal than when the on-air information is not input, and repeatedly reproduces at least a part of the buffered reproduction signal is when the predetermined operation is performed.

14. The player according to claim 4, wherein the control device repeatedly reproduces at least a part of the reproduction signal being reproduced as the predetermined control when a remaining reproduction time of the reproduction signal being reproduced is within a predetermined time while the on-air information is input.

15. The player according to claim 14, wherein the control device controls to display at least one of a message and a reason indicating that the repeated reproduction is performed or is being performed on an information display device capable of displaying a character or an image when the repeated reproduction is performed or is being performed.

16. The player according to claim 4, wherein the on-air information input device limits a control content of the predetermined control based on a state of the player.

17. The player according to claim 4 further comprising a user setting device that sets whether the predetermined control is performed based on the on-air information.

18. The player according to claim 4, wherein the control device does not perform the predetermined control when the on-air information is not input from the on-air information input device.

19. A reproduction system having one or more players and a mixer device outputting a reproduction signal reproduced by the player to an output device,
the mixer device comprising:
a reproduction signal input device that receives the reproduction signal from at least a player from the one or more players;
a reproduction signal output device that outputs the reproduction signal input from the reproduction signal input device to the output device; and
an on-air information output device that outputs on-air information indicating that the reproduction signal from the reproduction signal output device is output to the output device to the player as input source of the reproduction signal,
the player comprising:
a reproduction signal output device that outputs the reproduction signal to the mixer device;
an on-air information input device that receives the on-air information from the mixer device; and
a control device that performs a predetermined control for avoiding a mistaken operation based on the on-air information input from the on-air information input device.

20. A method of controlling a mixer device connected to one or more players and outputting a reproduction signal reproduced by the player comprising the steps performed by the mixer device of:
receiving the reproduction signal from at least a player among the one or more players;
outputting the input reproduction signal to the output device; and
outputting on-air information indicating that the reproduction signal is output to the output device to the player as input source of the reproduction signal.

21. A method of controlling a player that outputs a reproduction signal to a mixer device connected to an output device comprising the steps performed by the player of:
outputting the reproduction signal to the mixer device;
receiving on-air information from the mixer device indicating that the reproduction signal output from the player is being output to the output device by the mixer device; and
performing a predetermined control for preventing a mistaken operation based on the input on-air information.

22. A program that causes a computer to function at least one of each step in the method of controlling the mixer device as set forth in claim 20 and each step in the method of controlling the player as set forth in claim 21.
